(19) Europäisches Patentamt / European Patent Office / Office européen des brevets

(11) EP 2 541 809 B1

(12) EUROPEAN PATENT SPECIFICATION

(45) Date of publication and mention of the grant of the patent:
**02.11.2016 Bulletin 2016/44**

(51) Int Cl.:
***H04B 10/2581*** *(2013.01)* ***H04J 14/04*** *(2006.01)*

(21) Application number: **12174430.4**

(22) Date of filing: **29.06.2012**

# (54) METHOD AND SYSTEM FOR REDUCING THE MODAL DELAY IN A MULTIMODE TRANSMISSION SYSTEM

VERFAHREN ZUM REDUZIEREN DER MODALEN VERZÖGERUNG IN EINEM MEHRMODUS-ÜBERTRAGUNGSSYSTEM

PROCÉDÉ DE RÉDUCTION DU RETARD MODAL DANS UN SYSTÈME DE TRANSMISSION MULTIMODE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2011 EP 11172133**

(43) Date of publication of application:
**02.01.2013 Bulletin 2013/01**

(60) Divisional application:
**16181717.6**

(73) Proprietor: **Xieon Networks S.à r.l.**
**2633 Senningerberg (LU)**

(72) Inventors:
- **Jansen, Sander**
  **81379 Munich (DE)**
- **Kirstensen, Poul Dr.**
  **2605 Brondby (DK)**
- **Van den Borne, Dirk**
  **81379 Munich (DE)**
- **Grüner-Nielsen, Lars Dr.**
  **2605 Brondby (DK)**
- **Ellis, Andrew**
  **Northwich (GB)**

(74) Representative: **Lucke, Andreas et al**
**Boehmert & Boehmert**
**Anwaltspartnerschaft mbB**
**Patentanwälte Rechtsanwälte**
**Pettenkoferstrasse 20-22**
**80336 München (DE)**

(56) References cited:
**EP-A2- 1 396 742 US-A1- 2004 042 714**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 541 809 B1

## Description

### FIELD OF THE INVENTION

The invention relates to an optical communication system and to a method of processing data for optical networks. In particular, the invention relates to a modal delay compensation scheme.

### BACKGROUND OF THE INVENTION

with the continuing growth of demand for bandwidth, fiber optic transmission systems will inherently run into a capacity crunch on single mode fiber. The spectral efficiency of networks to date is practically limited to about 2b/s/Hz. In order to scale to higher spectral efficiencies, a denser constellation size than quadrature phase shift keying, QPSK, is required. However, a denser constellation will result in an increase in required optical signal to noise ratio, OSNR, and a reduction of the nonlinear tolerance. As a result, when scaling to denser constellation sizes, the feasible transmission distance is substantially decreased, adding significant cost to the network.

Recently multi-mode fibers have been proposed to significantly extend the nonlinear tolerance of the transmission system. In addition, these fibers can be used to increase the number of channels that can be transmitted through mode division multiplexing and multiple input multiple output, MIMO processing at the receiver. However, many challenges still remain before multi mode transmission can be realized. One of the main problems for the realization of long haul transmission over multi mode fiber is to cope with the difference in propagation group velocity or group delay between the modes. The delay between these modes makes it practically impossible to perform MIMO equalization at the receiver for long haul systems. It shall be noted, that the term multi mode fiber is common for fibers allowing more than a single mode and comprises so called few mode fibers as well. This terminology applies also for multi mode systems, which comprise so called few mode systems too.

A promising method to realize higher capacities is to use fibers that support more than one single mode. One way of designing such multi mode fibers is to significantly increase the core size compared to that of conventional single mode fibers, which will result in higher effective area and consequently higher nonlinear tolerance. In addition, these fibers support more than one propagation mode, which allows the use of mode division multiplexing.

The principle of mode division multiplexing is shown in Fig. 1. In this example, a 2-mode MIMO transmission system 100 is shown. At the transmitter 114, a single laser 102 is used to generate two polarization multiplexed signals 104, 106. The modulation format of these two signals can freely be chosen. After modulation, these signals are coupled into a multimode fiber 108. Many different methods exist to launch multiple signals into a multi mode fiber, such as fiber 108. In the shown example, spatial separation is used in order to maximize the orthogonality of the two launched signals. It's worthwhile to mention that the signals do not necessarily need to be launched exactly into the two modes of the fiber: as long as the launching positions cause the signals to propagate in an orthogonal manner the capacity of the system can be maximized.

At the receiver 116, the main challenge is to receive the complete signal. In this example the multi mode fiber 108 is coupled to two single mode fibers 110, 112. Please note that both single mode fibers will contain parts of the transmitted signal. As such, MIMO processing after coherent detection is required to separate the two launched modes again. The MIMO equalizer works only for a limited delay between the propagation modes. Thus, an important requirement for the receiver to work is that the delay between the different propagation modes is limited. This poses severe limitations to multi mode fiber transmission.

The problem to be solved is to overcome the disadvantages stated above and in particular to provide a solution that significantly reduces the modal delay between modes in a multi mode transmission system.

European Patent number 1396742 discloses a system for adjusting chromatic dispersion of a WDM signal along a multi-mode optical communication line comprising a succession of mode converters along the multi-mode fibres.

### SUMMARY OF THE INVENTION

In order to overcome the above-described need in the art, the present invention proposes a method and a system according to claims 1-8.

These methods provide the following advantages:

a) A significant reduction in modal delay between modes in a multi mode transmission system.

b) A significant reduction in the digital signal processing, DSP, required to implement long haul MIMO transmission over multi mode fiber

c) Such methods have relatively broad applications and can be easily implemented.

BRIEF DESCRIPTION OF THE DRAWINGS

The invention is explained by way of example in more detail below with the aid of the attached drawings.

Fig.1 is a schematic representation of a multi mode transmission system.

Fig.2 is a schematic representation of the mode-conversion according to an embodiment of the invention.

Fig.3 is a schematic representation of the mode-conversion according to an embodiment of the invention.

**DESCRIPTION OF THE INVENTION**

Illustrative embodiments will now be described with reference to the accompanying drawings to disclose the teachings of the present invention. While the present invention is described herein with reference to illustrative embodiments for particular applications, it should be understood that the invention is not limited thereto. Those having ordinary skill in the art and access to the teachings provided herein will recognize additional modifications, applications, and embodiments within the scope thereof and additional fields in which the present invention would be of significant utility.

In order to mitigate modal group delay, a modal delay compensation scheme which includes mode conversion is disclosed. An exemplary embodiment of the invention is described using the 2-in, 2-out multi-mode transmission system shown in Fig 1. The concept of mode-conversion is illustrated in Fig. 2. In this figure, transmission link 200 comprises two fiber propagation segments, namely the first 201 and the second 203, a transmitter 205 (similar to transmitter 114 in Fig. 1), a mode converter 213, and a receiver 207 (similar to receiver 116 in Fig. 1). At the transmitter 205 two signals are launched into two separate modes of the fiber, namely a first mode 209 and a second mode 211. As modes 209 and 211 propagate through the first segment 201 of transmission, there will exist a propagation or modal delay between the two signals. In order to mitigate this delay, modes 209, 211 are converted by means of a mode converter 213 so that in the second segment 203 of the transmission link the delay between the two signals is compensated. As a result, the net modal delay between the two signals is minimal after transmission.

A challenge with exchanging the modes in the middle of a link is that in dynamically switched, meshed networks, the middle point of a link is not always on one defined point. As such, an alternative solution can be to exchange modes in the middle of every single fiber span. For transmission systems that support more than two modes, it is possible to convert all the modes at multiple places along the transmission line such that the average group velocity of the modes is approximately the same. Specifically, optical signals are transmitted over a multi mode optical fiber transmission line, the multi mode fiber having N modes of transmission, such that the multi mode fiber receives N optical signals from N sources. Each of the N signals is received in each of the N modes of the multi mode fiber.

As the modes propagate along the transmission line, modal group delay builds between the modes for the reasons previously discussed. To compensate for such delay, the N modes are each converted to a different mode within the N group, each conversion occurring at a position along the transmission line, for a total of N positions, in order to equalize the difference in group velocity between the modes. Implementing such a method provides that at the end of the transmission line, each of the N optical signals will arrive approximately simultaneously (that is, at the same time).

Moreover, it is possible to compensate for the delays by separating the modes at the receiver and inserting optical or electrical delay lines to compensate for the modal delay. The delay of all modes depends on the transmission distance and fiber type.

Assuming the mode coupling is predominantly associated with fiber interfaces, multi mode optical amplifiers etc, for each input signal, the output of a single span of transmission fiber will consist of a superposition of pulses, one pulse corresponding to each fiber mode. In one embodiment of the invention, the modes are demodulated at each amplifier site, and exchanged, as shown in an exemplary embodiment in Fig 3.

In Fig. 3, an amplifier site 300 along a transmission line is shown. An optical signal propagates through a multi mode fiber 303 in a first mode $LP_{01}$ and a second mode $LP_{11}$ into the amplifier site 300. As the modes reach a demultiplexer 304 (for example, a multi mode coupler), they are demultiplexed between multi mode fibers 301 and 302. While the first mode $LP_{01}$ goes straight through the first fiber 301, the second mode $LP_{11}$ crosses a mode converter 306 along the second fiber 302, and thereby the second mode $LP_{11}$ is converted to the first mode $LP_{01}$. EDFA amplification then occurs at 307. The converted first mode $LP_{01}$ goes straight through the first fiber 302 and then crosses a mode converter 308 along the first fiber 301, which converts the first mode $LP_{01}$ to the second mode $LP_{11}$. Fibers 301 and 303 then go through a multiplexer 309 and the pulses exit the amplifier site 300 through an output multi mode fiber 305. At the output of the amplifier site 300, the two pulses have been amplified and have swapped modes.

This mode exchange reduces the accumulation of differential mode delay from a linear accumulation to a random walk, or may even eliminate the differential mode delay completely in certain circumstances.

In a more general case, multi mode fibers can be used to guide and convert a plurality of modes $LP_{m,n}$, or N modes, where N is equal to or greater than 2. The number of guided $LP_{m,n}$ modes can be found by solving the scalar wave equation for the refractive index profile of the multi mode fiber. While $LP_{01}$ represents the fundamental mode, it is important to understand that each $LP_{mn}$ mode actually consists of two or four degenerate modes. When m=0, the mode is two-fold degenerate corresponding to two independent states of polarization. When m≥1, the mode is four-fold degenerate, having two independent spatial states, with each spatial state having two independent states of polarization. In a mode division multiplexed system one may chose several options in using the modes:

1. Send only one optical signal per LP-mode.

2. Send one signal per each polarization of the LP-mode (two signals per mode).

3. For the $LP_{mn}$ modes with m≥1, send one signal per spatial state (two signals per mode).

4. For the $LP_{mn}$ modes with m≥1, send one signal per spatial state and one for each polarization state (four signals per mode).

The description so far has assumed selecting option 1 or 2. However, for options 3 and 4, special precaution must be taken. Currently known methods for mode conversion, only work for one spatial state of the $LP_{mn}$ modes with m≥1. An embodiment of the present invention describes mode conversion for a system using N modes, for example, the fundamental mode $LP_{01}$, and the two spatial states of higher order mode $LP_{11}$, which are denoted as $LP_{11A}$ and $LP_{11B}$.

As a pulse or optical signal propagates through a multi mode fiber in a transmission line, the $LP_{01}$ and $LP_{11A}$ modes will convert or exchange places at a position of about one-third of a total length of the propagation path (between a transmitter and a receiver, for example). The $LP_{11B}$ mode remains unaffected until all three modes reach a position that is about two-thirds of the total path length. At this point, the $LP_{01}$ and $LP_{11B}$ modes will convert or exchange positions. The inventive system and methods thereby allow for all three modes to arrive at a desired end point having little to no modal group delay.

As such, these methods and systems can be applied to a number N of optical signals propagating through a transmission line in N modes, where the system comprises N transmitters for generating the N signals, and N mode converters placed along the transmission line for converting each of the N modes in order to minimize any modal group delay between the N modes at the end of the transmission line. An aspect of this embodiment includes placing the N mode converters at N positions along the transmission line such that the N positions are approximately equidistant between one another. That is, the N mode converters are positioned evenly along the transmission line, between spans of multi mode fiber.

Several technologies exist that can be used to realize mode-conversion of the co-propagating spatial modes of a multi moded fiber. Such mode converters can broadly be classified in to two classes: transverse and longitudinal transformers. Holographic plates and phase sensitive elements are examples of transverse transformers whereas long period fiber gratings are an example of a longitudinal transformer.

Long period fiber gratings (LPG) couple light from one mode into another by means of a periodic perturbation. The periodicity of the perturbation is essentially the period of the beat between two spatial modes. This perturbation can be implemented by several means such as, periodic exposure with UV-light, periodic exposure with a $CO_2$ laser, periodic exposure with heat, or periodic perturbation with a mechanical grating. The perturbation can be either azimuthally symmetric or asymmetric. In the case of an azimuthally symmetric perturbation, modes having the same symmetry will couple. In the case of an azimuthally asymmetric perturbation, modes having different symmetry or asymmetry will couple.

The coupling amplitude A can be written as an integral over the two modes and the periodic perturbation.

$$A = \int_0^{r_{fiber}} \int_0^{2\pi} E_1(r,\varphi) P_{r\varphi}(r,\varphi) E_2^*(r,\varphi)\, r\, dr\, d\varphi \int_0^{L_{LPG}} e^{i\beta_1 z} P_z(z) e^{i\beta_2 z}\, dz$$

Where $E_1(r,\varphi)$ and $E_2^*(r,\varphi)$ are the transverse part of the electric field and the complex conjugate of the transverse part of the electric field of the two modes while $\beta_1,\beta_2$ are the propagation constants of the two modes. The perturbation is assumed to be described by the product $P_{r\varphi}(r,\varphi)P_z(z)$. Thus the function $P_z(z)$ describes the periodicity of the perturbation. It is possible to obtain a phase matching condition, by requiring that also the last integral should be non-vanishing, thus:

$$\int_0^{L_{LPG}} e^{i\beta_1 z} P_z(z) e^{i\beta_2 z} dz \neq 0 \quad \Rightarrow abs(\beta_1 - \beta_2) \approx \frac{2\pi}{\Lambda}$$

Where A is the period of the LPG and the integral is over the length of the LPG, $L_{LPG.}$ When the phase matching condition is fulfilled then light is transferred from the first mode to the second mode and since the amplitude integral is symmetric in the two modes then light from the first mode is also transferred to the second mode. Long period gratings thus represent a low loss (< 0.5 dB), efficient device.

Alternatively it is possible to transfer light between modes using a transverse transformer which usually consist of two lenses collimating the light from the input fiber on to a wave front manipulating element and then focusing the light onto the output fiber end. The role of the wave front manipulating element is to transform the incoming electric field $E_{in}(r,\varphi,z) = \sqrt{I_{in}(r,\varphi,z)}e^{i\phi_{in}(r,\varphi,z)}$ which is the far field of one mode in the incoming fiber into the far field of another mode in the output fiber $E_{out}(r,\varphi,z) = \sqrt{I_{out}(r,\varphi,z)}e^{i\phi_{out}(r,\varphi,z)}$ . . $\phi_{in}(r,\varphi,z),\phi_{out}(r,\varphi,z)$ represents the intensity profile and $\phi_{in}(r,\varphi,z),\phi_{out}(r,\varphi,z)$ represents the phase of the input and output field, respectively. One example could be a simple phase only optical element where one half of the plate is providing a half wave retardation thus enabling coupling light between the symmetric $LP_{01}$ and the asymmetric $LP_{11}$ :

$$I_{in}(r,\varphi) \quad = \quad \begin{cases} I_{out}(r,\varphi) & for \quad \varphi < \pi \\ I_{out}(r,\varphi) + \pi & for \quad \varphi > \pi \end{cases}$$

Since the intensity profiles $I_{in}(r,\varphi,z)$, $I_{out}(r,\varphi,z)$ do not match, the device will in general also couple a fraction of the light into undesired modes (either propagating modes or leaky modes, the latter leading to loss). The mismatch between the intensity profiles can be improved by introducing loss, which would minimize the coupling to unwanted modes however introducing additional loss is in many cases undesirable.

An alternative approach is to use an optical system comprising two wave front manipulating elements, which are known to be a low loss, efficient approach for transferring light between modes.

The present invention is not limited to the details of the above described principles. The scope of the invention is defined by the appended claims and all changes and modifications as fall within the equivalents of the scope of the claims are therefore to be embraced by the invention. Mathematical conversions or equivalent calculations of the signal values based on the inventive method or the use of analogue signals instead of digital values are also incorporated.

## Claims

1. A method for reducing modal group delay in a mode division multiplexed system (100; 200) comprising a multi mode transmission line having N modes (209, 211) for N transmission signals, wherein each signal is assigned to a different mode, the method comprising the steps of

   - receiving N optical signals from N transmitters (TX1, ... TX4), propagating the N optical signals in the N modes of transmission; and
   - converting the N modes at N positions along the transmission line to equalize the difference in modal group delay generated between the N modes, such that at the end of the transmission line, each of the N optical signals will arrive having approximately the same modal delay.

2. The method of claim 1 wherein the step of converting further comprises converting each of the N modes (209,211) at equal positions via a mode converter (213) along the transmission line.

3. The method of claim 1 wherein the transmission line comprises multi mode fibers.

4. A mode division multiplexed system for transmitting a number, N, of optical signals over a transmission line comprising:

N transmitters for generating N signals which are propagated through a transmission line in N modes, so that each signal is assigned to a different mode;
at least one span of a multi mode fiber (301, 302, 303, 305) wherein the multi mode fiber (301, 302, 303, 305) has N modes;
N mode converters placed along the transmission line for converting each of the N modes in order to equalize the difference in modal delay generated between the N modes so as to minimize any modal group delay between the N modes at the end of the transmission line; and
N receivers.

**5.** The system of claim 4, wherein at least one of the N mode converters is a transverse transformer.

**6.** The system of claim 5, wherein the transverse transformer is selected from the group consisting of holographic plates and phase sensitive elements.

**7.** The system of claim 4, wherein at least one of the N mode converters is a longitudinal transformer.

**8.** The system of claim7, wherein at least one of the N mode converters is a long period grating.

## Patentansprüche

**1.** Verfahren zum Reduzieren der modalen Gruppenverzögerung in einem Moden-Multiplexsystem (100; 200) umfassend eine Multimoden-Übertragungsleitung (209, 211), die N Moden für N Übertragungssignale hat, wobei jedes Signal einer unterschiedlichen Mode zugewiesen wird, wobei das Verfahren folgende Schritte umfasst:

- Empfangen von N optischen Signalen aus N optischen Sendern (TX1,... TX4), wobei die N optischen Signale in den N Übertragungsmoden propagiert werden; und
- Umwandeln der N Moden an N Stellen entlang der Übertragungsleitung, um den zwischen den N Moden erzeugten Unterschied in der modalen Verzögerung auszugleichen, so dass am Ende der Übertragungsleitung jedes der N optischen Signale mit ungefähr derselben modalen Gruppenverzögerung ankommt.

**2.** Verfahren nach Anspruch 1, wobei der Schritt des Umwandelns ferner das Umwandeln jeder der N Moden (209, 211) an gleichen Stellen mittels eines Modenwandlers (213) entlang der Übertragungsleitung umfasst.

**3.** Verfahren nach Anspruch 1, wobei die Übertragungsleitung Multimodenfasern umfasst.

**4.** Moden-Multiplexsystem zum Übertragen einer Anzahl N optischer Signale durch eine Übertragungsleitung, umfassend:

N Sender zum Erzeugen von N Signalen, die in N Moden durch eine Übertragungsleitung propagiert werden, so dass jedes Signal einer unterschiedlichen Mode zugewiesen wird;
wenigstens ein Segment einer Multimodenfaser (301, 302, 303, 305), wobei die Multimodenfaser (301, 302, 303, 305) N Moden hat;
N Modenwandler, die entlang der Übertragungsleitung vorgesehen sind, um jede der N Moden umzuwandeln, um den zwischen den N Moden erzeugten Unterschied in der modalen Gruppenverzögerung auszugleichen, so dass jegliche modale Verzögerungen zwischen den N Moden am Ende der Übertragungsleitung minimiert werden; und
N Empfänger.

**5.** System nach Anspruch 4, wobei wenigstens einer der N Modenwandler ein transversaler Wandler ist.

**6.** System nach Anspruch 5, wobei der transversale Wandler eine holographische Platte oder ein phasenempfindliches Element ist.

**7.** System nach Anspruch 4, wobei wenigstens einer der N Modenwandler ein longitudinaler Wandler ist.

**8.** System nach Anspruch 7, wobei wenigstens einer der N Modenwandler ein Gitter mit langer Periode ist.

**Revendications**

1. Procédé de réduction de retard de groupe modal dans un système multiplexé par répartition en modes (100 ; 200) comprenant une ligne de transmission multimode présentant N modes (209, 211) pour N signaux de transmission, dans lequel chaque signal est affecté à un mode distinct, le procédé comprenant les étapes ci-dessous consistant à :

   - recevoir N signaux optiques en provenance de N émetteurs (TX1, ..., TX4), propager les N signaux optiques dans les N modes de transmission; et
   - convertir les N modes au niveau de N positions le long de la ligne de transmission en vue d'égaliser la différence en termes de retard de groupe modal généré entre les N modes, de sorte qu'à l'extrémité de la ligne de transmission, chacun des N signaux optiques arrivera en présentant approximativement le même retard modal.

2. Procédé selon la revendication 1, dans lequel l'étape de conversion consiste en outre à convertir chacun des N modes (209, 211) au niveau de positions égales par l'intermédiaire d'un convertisseur de mode (213) le long de la ligne de transmission.

3. Procédé selon la revendication 1, dans lequel la ligne de transmission comprend des fibres multimodes.

4. Système multiplexé par répartition en modes destiné à transmettre un nombre N de signaux optiques sur une ligne de transmission comprenant:

   N émetteurs pour générer N signaux qui sont propagés à travers une ligne de transmission dans N modes de sorte que chaque signal est affecté à un mode distinct;
   au moins une étendue d'une fibre multimode (301, 302, 303, 305), dans lequel la fibre multimode (301, 302, 303, 305) présente N modes;
   N convertisseurs de mode placés le long de la ligne de transmission pour convertir chacun des N modes afin d'égaliser la différence en termes de retard de groupe modal généré entre les N modes, de manière à minimiser tout retard de groupe modal entre les N modes à l'extrémité de la ligne de transmission; et
   N récepteurs.

5. Système selon la revendication 4, dans lequel au moins l'un des N convertisseurs de mode correspond à un transformateur transversal.

6. Système selon la revendication 5, dans lequel le transformateur transversal est sélectionné à partir du groupe comportant des plaques holographiques et des éléments sensibles à la phase.

7. Système selon la revendication 4, dans lequel au moins l'un des N convertisseurs de mode correspond à un transformateur longitudinal.

8. Système selon la revendication 7, dans lequel au moins l'un des N convertisseurs de mode correspond à un réseau à longue période.

Fig. 1

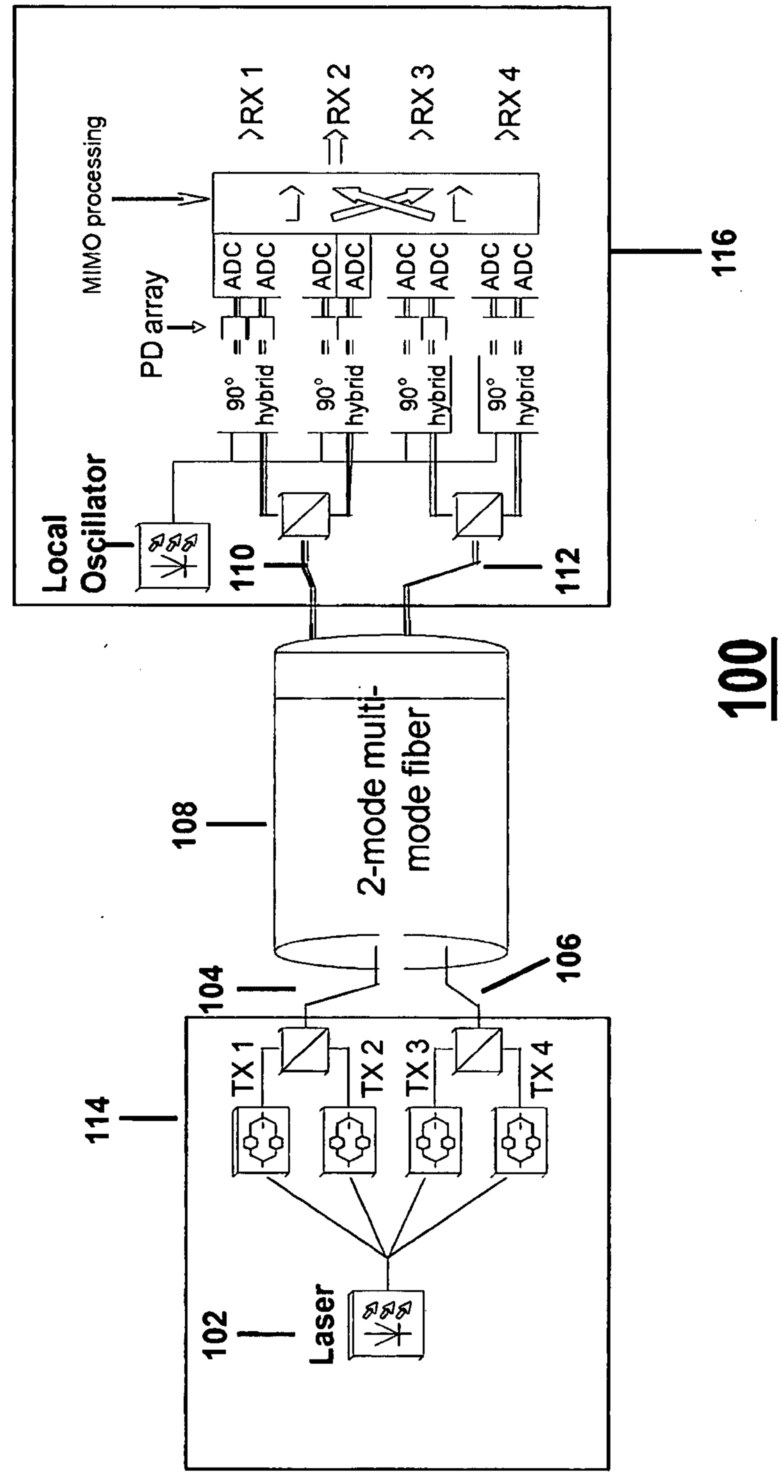
MIMO processing
PD array
Local Oscillator
90° hybrid
90° hybrid
90° hybrid
90° hybrid
ADC
ADC
ADC
ADC
ADC
ADC
ADC
ADC
RX 1
RX 2
RX 3
RX 4
110
112
116
2-mode multi-mode fiber
108
100
104
106
114
102
Laser
TX 1
TX 2
TX 3
TX 4

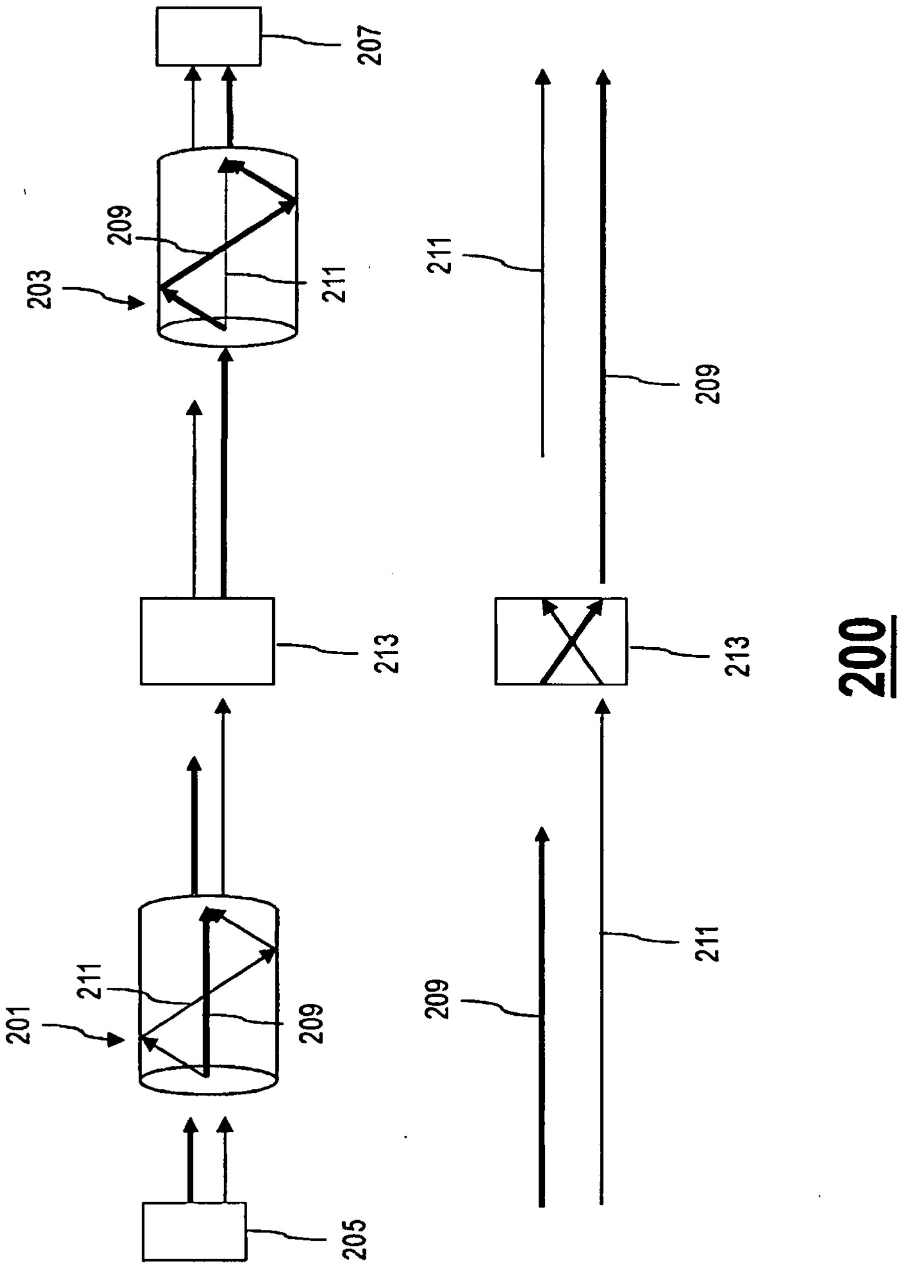


Fig. 2

Fig. 3

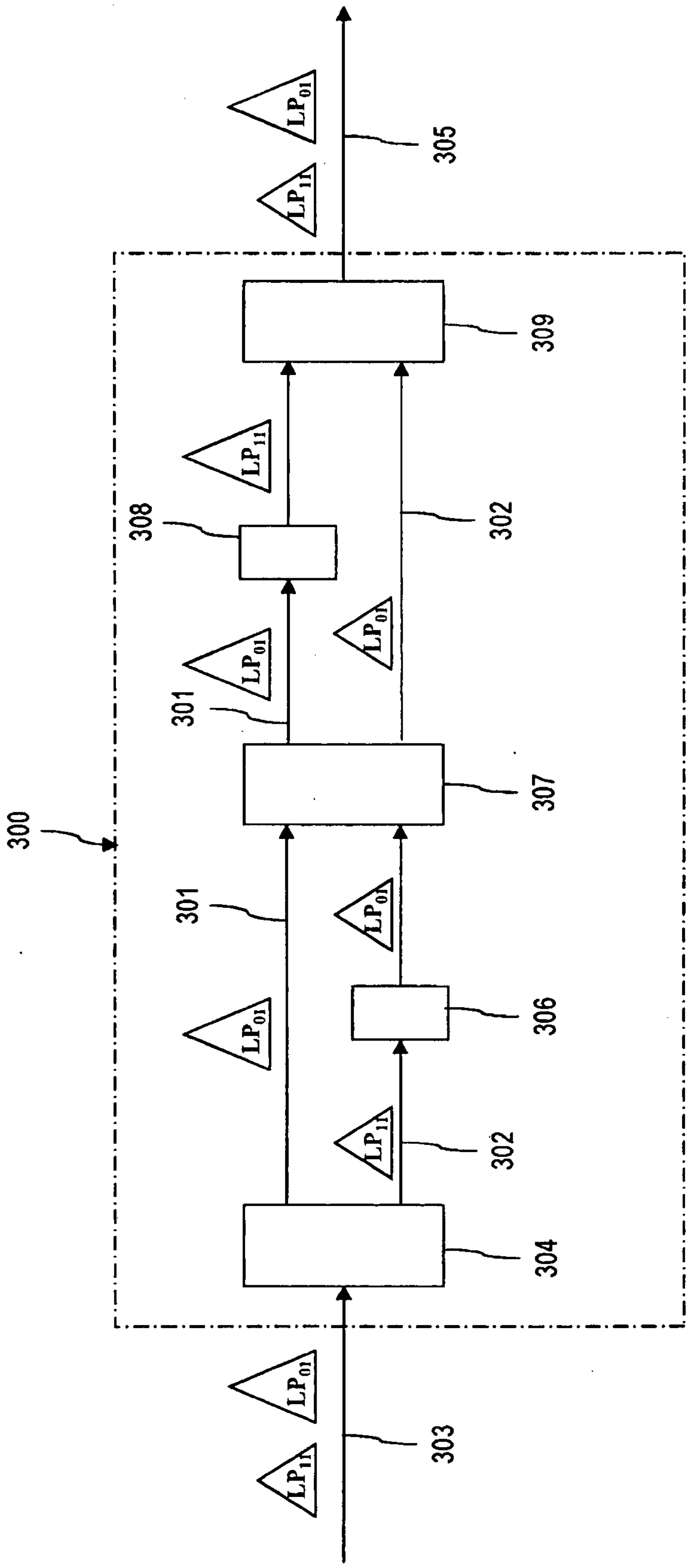

300
$LP_{11}$
$LP_{01}$
303
304
301
$LP_{01}$
302
$LP_{11}$
306
$LP_{01}$
307
301
$LP_{01}$
$LP_{01}$
308
302
$LP_{11}$
309
$LP_{11}$
$LP_{01}$
305

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1396742 A